# EUROPÄISCHE PATENTSCHRIFT

(11) **EP 1 307 304 B1**
(45) Veröffentlichungstag und Bekanntmachung des Hinweises auf die Patenterteilung: **28.09.2005**
(21) Anmeldenummer: 01957702.2
(22) Anmeldetag: 04.07.2001
(51) Int. Cl.: B21D 53/88, B62D 3/12, B23P 19/04

(54) **HERSTELLUNGSVERFAHREN UND VORRICHTUNG FÜR ZAHNSTANGEN-LENKGEHÄUSE**
PRODUCTION METHOD AND DEVICE FOR GEAR RACK STEERING HOUSING
PROCEDE ET DISPOSITIF DE FABRICATION DE CARTER DE DIRECTION A CREMAILLERE

(30) Priorität: 04.07.2000 DE 10033305
(43) Veröffentlichungstag der Anmeldung: 07.05.2003
(73) Patentinhaber: SchmitterChassis GmbH, 48317 Drensteinfurt (DE)
(72) Erfinder: GÜNTHER, Friedhelm, 44359 Dortmund (DE)
(74) Vertreter: Götz, Georg Alois
(86) Internationale Anmeldenummer: PCT/DE2001/002411
(87) Internationale Veröffentlichungsnummer: WO 2002/004141

(56) Entgegenhaltungen:
- DE-A- 4 201 730
- US-A- 5 154 046
- PATENT ABSTRACTS OF JAPAN vol. 1999, no. 05, 31. Mai 1999 (1999-05-31) -& JP 11 042514 A (HITACHI POWDERED METALS CO LTD), 16. Februar 1999 (1999-02-16)
- PATENT ABSTRACTS OF JAPAN vol. 1999, no. 13, 30. November 1999 (1999-11-30) -& JP 11 222146 A (KOYO SEIKO CO LTD), 17. August 1999 (1999-08-17)
- PATENT ABSTRACTS OF JAPAN vol. 1998, no. 06, 30. April 1998 (1998-04-30) -& JP 10 035524 A (T R W S S J KK), 10. Februar 1998 (1998-02-10)

## Beschreibung

Die Erfindung betrifft ein Verfahren zur Herstellung eines Zahnstangen-Lenkgehäuses gemäß Oberbegriff des Anspruchs 1. Femer betrifft die Erfindung eine zur Durchführung des Verfahrens geeignete Vorrichtung gemäß Oberbegriff des Anspruchs 15. So ein Verfahren und eine Vorrichtung ist aus der DE-A- 4 201 730 bekannt.

Zahnstangenlenkungen werden innerhalb des Fahrwerkes eines Kraftfahrzeuges eingesetzt, um die über das Lenkrad aufgebrachte drehende Lenkbewegung in eine geradlinige Bewegung zum Verschwenken der zu lenkenden Fahrzeugräder umzuwandeln. Zur Lenkkraftunterstützung kommt hierbei ein Servoantrieb zum Einsatz, der an verschiedenen geeigneten Stellen innerhalb des Lenkkraftflusses angeordnet werden kann.

Eine Zahnstangenlenkung der hier interessierenden Art geht aus dem Prospekt "Die elektrische Servolenkung" (Firma ZF Friedrichshafen AG, Druck-Nr. G 7802 P-MBA 2/98 d) hervor. Die Zahnstangenlenkung besitzt ein rohrartiges Zahnstangenlenkgehäuse, das eine innenliegende Zahnstange schützend umgibt Am Zahnstangenlenkgehäuse ist ein Ritzeleingriffsbereich vorgesehen, über den eine Ritzeleinheit die am Lenkrad erzeugte Drehbewegung in die Zahnstangenlenkung einleitet. Ein Ritzel der Ritzeleinheit greift zu Umwandlung der Drehbewegung in eine geradlinige Bewegung in die Verzahnung der innenliegenden Zahnstange ein. Die hierdurch erzeugbare Hin- und Herbewegung der Zahnstange ist über endseitig aus dem Zahnstangenlenkgehäuse abgedichtet geführte Lenkstangen abgreifbar, die wiederum zum Lenken an je einem Rad angelenkt sind. Je nach Fahrzeugklasse kann ein die Lenkbewegung unterstützender elektrischer Servoantrieb entweder in die Lenksäule integriert sein, oder am Ritzel angeordnet sein oder auch auf die Zahnstange einwirken. Letzterenfalls ist das Zahnstangenlenkgehäuse an einem Endbereich entsprechend modifiziert.

Das bekannte Zahnstangenlenkgehäuse besteht aus Aluminium und ist im Druckgussverfahren hergestellt. Nach dem Gießen ist eine spanende Bearbeitung erforderlich, um Anbauteile - wie beispielsweise die Ritzeleinheit - am Zahnstangenlenkgehäuse montieren zu können. Die spanende Bearbeitung erstreckt sich auf das Fräsen von Anlageflächen für die zu montierenden Teile sowie Anfertigungen von Grund- und Durchgangsbohrungen zur Befestigung, die teilweise durch Gewindeschneiden weiterbearbeitet sind.

Aus DE 42 37 485 A1 ist eine Zahnstangen-Hilfskraftlenkung bekannt, bei der in einem Lenkgehäuse ein Ritzel drehbar gelagert und eine davon geführte Zahnstange verschiebbar ist. Ein rohrartiger Zylinder eines Servomotors ist mit dem Lenkgehäuse fest verbunden. Mit dem Zylinder einstückig sind nach außen vorragende, ringförmige Kragen durch ein Hochdruck-Umformverfahren ausgebildet. Ferner ist im Ritzeleingriffsbereich ein unterer Lagerträger für Kugellager ausgebildet.

Das Innenhochdruckumformen findet ferner bei einem bekannten Verfahren mit Vorrichtung zur Herstellung eines Integralgehäuses für Hydrolenkung Anwendung (DE 197 51 408 A1). Dieses besitzt einen Gehäuseabschnitt zur Aufnahme eines ein Ritzel und ein Zahnstangenteil aufweisenden Lenkgetriebes und einen daran anschließenden Gehäuseabschnitt für die Anordnung der hydraulischen Lenkunterstützung. Mit dem Innenhochdruck-Umformungsprozeß wird eine kugelartige Auswölbung gebildet. Nach dem Herausnehmen des umgeformten Teiles aus einem Gesenk erfolgen weitere kleine Umformungen wie z. B. Anformung einer Sicke und abschließend eine mechanische Endbearbeitung. Letzteres ist jedoch nicht näher erläutert.

Ein gattungsgemäßes Gehäuse für eine hydraulische Servolenkung ist aus DE 42 01 730 A1 bekannt. In einem Ritzelbereich sind mehrere Ausdrückungen, die teilweise miteinander fluchten, ausgebildet. Sie nehmen eine Lenkwelle auf, die fest mit einem Lenkrad verbunden ist. Die Ausdrückungen werden durch Aufbohren gebildet, um eine Schraube zum Andrücken eines Druckstücks ansetzen zu können. Das gesamte Gehäuse wird ebenfalls im Innenhochdruckverfahren hergestellt, wobei ein Gehäuseende mit einer Aufweitung dargestellt ist, deren Funktion aber nicht näher erläutert ist.

Es ist die Aufgabe der vorliegenden Erfindung, ein Verfahren sowie eine Vorrichtung zur Herstellung eines Zahnstangenienkgehäuses zu schaffen, durch das/die eine einfachere Herstellung unter Verkürzung der Herstellungszeit und Verringerung von zur Herstettung erforderlichen Prozeßschritten möglich wird.

Zur Lösung wird erfindungsgemäß das Im Patentanspruch 1 angegebene Verfahren sowie die Hilfsmittel dafür gemäß sonstigen unabhängigen Ansprüchen vorgeschlagen. Weitere vorteilhafte und zweckmäßige Ausgestaltungen ergeben sich aus den abhängigen Ansprüchen.

Die Erfindung schließt die verfahrenstechnische Lehre ein, dass zunächst mittels Innenhochdruckumformen (IHU) ein rohrartiges Ausgangsmaterial aus Stahl innerhalb eines Umformgesenks zur vollständigen Konturausbildung des Zahnstangenlenkgenäuses einem innendruck ausgesetzt wird. Unmittelbar anschließend erfolgt ein aufweitendes Einpressen von Kolbenstangenführungselementen in beide Endbereiche des Zahnstangenlenkgehäuses. Je nach Anforderung wird danach zur Fertigstellung des Ritzeleingriffsbereiches an dem Zahnstangenlenkgehäuse eine Paßdurchgangsbohrung angefertigt. Schließlich kann koaxial zur Paßdurchgangsbohrung zweckmäßig ein Anschweißen eines unteren Lagerträgers sowie einer oberen Anbauebene für die Ritzeleinheit erfolgen.

Das erfindungsgemäße Verfahren bietet den Vorteil, das Zahnstangenlenkgehäuse innerhalb weniger Prozeßschritte zu fertigen, wobei sich eine spanende Bearbeitung lediglich auf das Anfertigen der Paßdurchgangsbohrung beschränkt. Zum Verbinden von Anbauteilen wird weitestgehend anstelle von herkömmlichen Schraubbefestigungen das Verfahren des Schwelßens angewandt, das hier durch die Verwendung von Stahl als Ausgangsmaterial möglich ist. Zur Führung der Lenkstangen im Austrittsbereich zu beiden Enden des Zahnstangenlenkgehäuses sind separate Einpreßbuchsen vorgesehen, die in einem einzigen Verfahrensschritt beim Einpressen zugleich die beiden Endbereiche des Zahnstangenlenkgehäuses aufweiten, und damit einen festen Sitz für hier anzubringende Faltenbälge ais Schmutzschutz bilden,

Zusätzlich ist es auch möglich, die aufgeweiteten Enden des Zahnstangenlenkgehäuses erforderlichenfalls durch einen weiteren Umformschritt oder durch Spanen zu bearbeiten, um die Verbindung mit den aufgeschobenen Faltenbälgen zusätzlich zu sichern.

Die genannten Führungselemente haben die Funktion, die Kolbenstange bzw. Lenkstange direkt zu führen. Dazu können eingeklippte Kunststoff-Führungsbuchsen verwendet werden. Eine weitere Funktion der Führungselemente besteht darin, einen mechanischen Festanschlag der Lenkung, sogenannter "Lockstop", zu bilden.

Mit besonderem Vorteil wird das erfindungsgemäße Verfahren zweiphasig gestaltet, indem die Lenkstangen-Führungselemente zunächst zweckmäßig mit weniger Kraft axial in das rohrartige Gehäuse eingeschoben und dann in der zweiten Phase mit voller Kraft zum Aufweiten der beiden Gehäuse-Endbereiche vorzugsweise in radialer Richtung in das Rohrinnere axial eingepreßt werden.

Nach einer anderen vorteilhaften Erfindungsausbildung erfolgt das Aufweiten über die axiale bzw. achsparallele Längenerstreckung der Gehäuse-Endbereiche zweistufig, indem die Endbereiche mit unterschiedlichen Weiten oder Innendurchmessern aufgeweitet werden. Dabei liegt die größere der beiden Weiten oder Innendurchmesser im vollständig eingeschobenen Zustand dem Gehäuse-Stimende näher als die kleinere. Durch diese Abstufung wird mit zunehmender Erstreckung in das Gehäüseinnere eine stufenartige Verjüngung für den Gehäuse-Endbereich erreicht, welche bei einem etwaigen nachträglichen Einsetzen von Faltenbälgen eine Zentrierungsfunktion erfüllen kann.

Insbesondere bei Einsatz in einer Hydrolenkung ergibt sich die Anforderung, dass die Lenkstangen-Führungselemente aus dem inneren der Gehäuse-Endbereiche wenigstens nicht mehr herausgelangen können. Dem wird mit einer Erfindungsausbildung dahingehend begegnet, dass nach dem Einpressen Arretierelemente derart ausgebildet werden, dass die Lenkstangenführungselemente an einer anliegenden Gehäuse-Innenwandung wenigstens in bzw. gegen Löse- bzw. Ausziehrichtung festgelegt sind.

Vorzugsweise erfolgt das Anschweißen des Lagerträgers sowie der Anbauebene durch das Verfahren des Laserschweißens. Hierdurch kann ein Wärmeverzug zwischen dem Lagerträger und dem Zahnstangenlenkgehäuse und/oder diesem und der Anbauebene vermieden werden. An dieser Stelle ist eine genaue koaxiale relative Lage der miteinander verbundenen Teile erforderlich, um ein exaktes Eingreifen des Ritzels in die Verzahnung der Zahnstange zu gewährleisten.

Zur Befestigung des Zahnstangenlenkgehäuses am Fahrwerk eines Fahrzeuges kann vorzugsweise ein durch Biegeumformen hergestelltes, U-förmiges Halteblech an mindestens einem Endbereich des Zahnstangenlenkgehäuses angeschweißt werden. Die Verwendung eines U-förmigen gebogenen Haltebleches, dessen beide Schenkel am Zahnstangenlenkgehäuse angeschweißt sind, stellt eine einfache und zuverlässige Befestigungsmöglichkeit des durch Innenhochdruckumformen ausgebildeten stahlrohrartigen Zahnstangenlenkgehäuses dar.

Um einen zusätzlichen Korrosionsschutz für das Zahnstangenlenkgehäuse zu erhalten, kann dieses mit einer Beschichtung, beispielsweise mit einer Lackierung versehen werden, oder galvanisch behandelt werden.

Das erfindungsgemäße Verfahren zur Herstellung des Zahnstangenlenkgehäuses kann vorzugsweise mittels einer Vorrichtung ausgeführt werden, die für den ersten Verfahrensschritt bezüglich des Innenhochdruckumformens eine geteilte Umformgesenkeinheit umfaßt, die eine Negativkontur des Zahnstangenlenkgehäuses enthält. Nachgeordnet sind eine Preßeinheit und optional eine Fräseinheit und schließlich eine Schweißeinheit vorgesehen.

Weitere Einzelheiten, Merkmale, Vorteile und Wirkungen auf der Basis der Erfindung ergeben sich aus der nachfolgenden Beschreibung bevorzugter Ausführungsformen der Erfindung und den Zeichnungen. Diese zeigen in:
- Figur 1: ein erfindungsgemäß gefertigtes Zahnstangen-Lenkgehäuse in zwei gegeneinander verdrehten Längsansichten,
- Figur 2: einen Schnitt in Längsrichtung durch das Zahnstangen-Lenkgehäuse im Bereich der Paßdurchgangsbohrung,
- Figur 3: alternative, auf entsprechende Einsatzfälle angepaßte Konturausbildungen des Zahnstangen-Lenkgehäuses in Längsansicht,
- Figur 4: ein schematisches Ablaufdiagramm der einzelnen Verfahrensschritte zur Herstellung des Zahnstangen-Lenkgehäuses,
- Figur 5a: im Längsschnitt durch das Zahnstangenlenkgehäuse eine erste Phase des Verfahrens zum aufweitenden Einpressen von Lenkstangen-Führungselementen,
- Figur 5b und c: in entsprechenden Ansichten eine zweite und eine dritte Phase des genannten Verfahrensschrittes,
- Figur 6 und 7: jeweils im Längs-Halbschnitt unterschiedliche Eingriffsarten zwischen Lenkstangen-Führungselement und Gehäuse-Innenwandung.

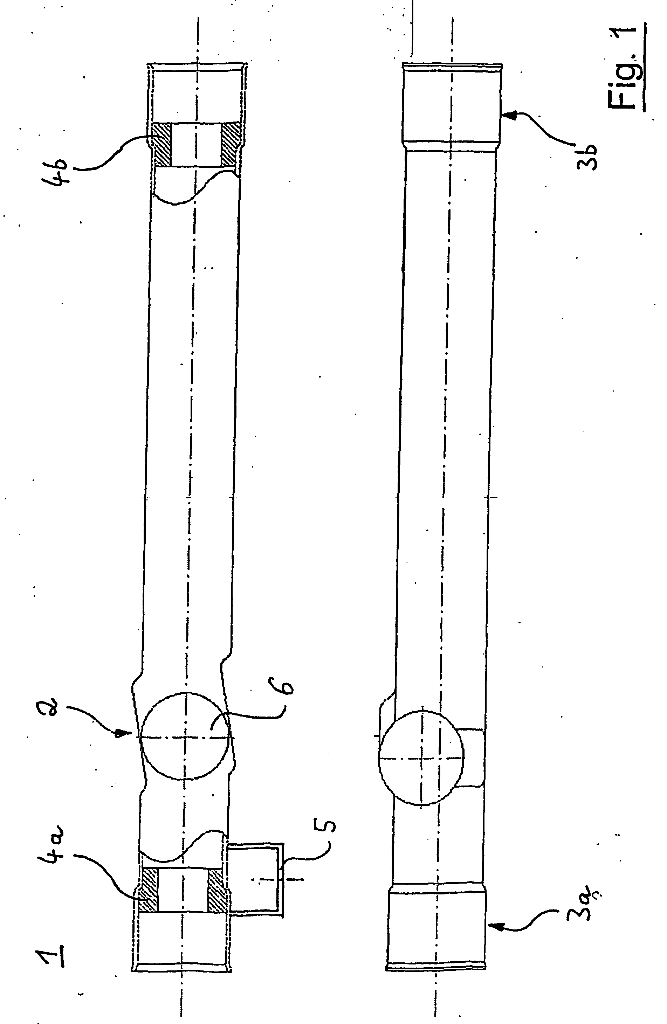

Das mit dem beanspruchten Herstellungsverfahren zu fertigende Zahnstangenlenkgehäuse 1 gemäß Figur 1 weist eine zylindrische Grundgestalt auf. Die zylindrische Grundgestalt des Zahnstangenlenkgehäuses 1 wird unterbrochen durch einen Ritzeleingriffsbereich 2. Am Ritzeleingriffsbereich 2 kommt eine hier nicht dargestellte Ritzeleinheit zur Längsbewegung einer hier ebenfalls nicht dargestellten innerhalb des Zahnstangenlenkgehäuses 1 verlaufenden Zahnstange zum Einsatz. Das aus Stahl bestehende Zahnstangenlenkgehäuse 1 weist zwei endseitige Aufweitbereiche 3a und 3b auf. Innerhalb der Aufweitbereiche 3a und 3b ist je ein Lenkstangenführungselement 4a bzw. 4b angeordnet. Weiterhin ist in einem Endbereich des Zahnstangenlenkgehäuses ein U-förmiges Halteblech 5 angebracht. Mit dem Halteblech 5 ist eine Befestigung des Zahnstangenlenkgehäuses 1 an einem hier nicht weiter dargestellten Fahrwerk eines Fahrzeuges möglich. Das Halteblech 5 ist durch Schweißen mit dem Zahnstangenlenkgehäuse 1 verbunden. Im Ritzeleingriffsbereich 2 des Zahnstangenlenkgehäuses 1 befindet sich eine Paßdurchgangsbohrung 6.

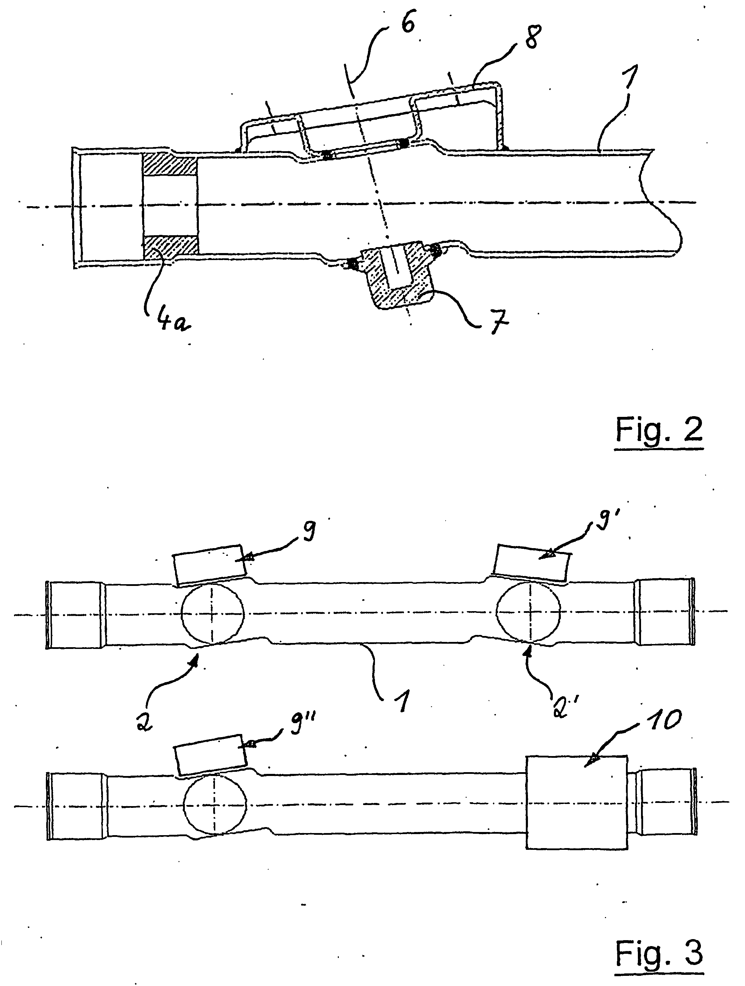

Die in Figur 2 im Detail dargestellte Paßdurchgangsbohrung 6 verläuft schräg zur Längsachse des Zahnstangenlenkgehäuses 1. Koaxial zur Paßdurchgangsbohrung 6 ist ein unterer Lagerträger 7 sowie eine obere Anbauebene 8 durch Schweißen befestigt. Wie dargestellt, liegen die Schweißnähte hier unmittelbar im Bereich der Paßdurchgangsbohrung 6. Die obere Anbauebene 8 ist mit zusätzlichen Schweißstellen am Zahnstangenlenkgehäuse 1 befestigt. Der untere Lagerträger 7 dient zur Aufnahme eines Nadellagers, in dem die Welle des hier nicht dargestellten Ritzels der Ritzeleinheit angeordnet ist. An der oberen Anbauebene 8 ist die Ritzeleinheit durch Schrauben befestigbar.

Gemäß Figur 3 kann eine Befestigung einer Ritzeleinheit 9 und 9' auch an zwei Ritzeleingriffsbereichen 2 und 2' erfolgen. Hierdurch ist eine gesplittete Krafteinwirkung auf die innenliegende Zahnstange möglich. Nach einer weiteren (unten abgebildeten) Ausgestaltungsvariante kann das Zahnstangenlenkgehäuse 1 neben einer Ritzeleinheit 9" auch mit einer Servoeinheit 10 versehen sein. Die Servoeinheit 10 ist hier zur Lenkunterstützung für schwere Fahrzeuge als Kugelumlaufgetriebe ausgebildet. Das erfindungsgemäße Verfahren läßt auch andere Ausgestaltungsvarianten für das Zahnstangenlenkgehäuse 1 zu.

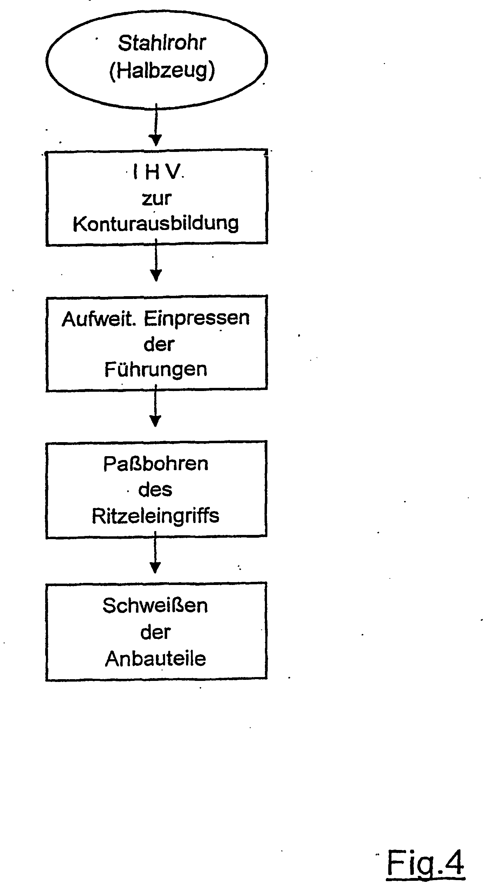

Das Zahnstangenlenkgehäuse wird erfindungsgemäß durch das in Figur 4 veranschaulichte Verfahren hergestellt. Ausgehend von einem umformbaren Stahlrohr als Halbzeug wird in einem ersten Verfahrensschritt ein Innenhochdruckumformen innerhalb einer geteilten Umformgesenkeinheit durchgeführt. Hierbei wird bereits eine vollständige Konturausbildung des Zahnstangenlenkgehäuses 1 erzielt. Darauffolgend erfolgt in einem kombinierten Verfahrensschritt ein aufweitendes Einpressen der Lenkstangenführungselemente 4a und 4b in die beiden Endbereiche 3a,3b des Zahnstangenlenkgehäuses 1. Mit dem Einpressen erfolgt gleichzeitig das Aufweiten der Endbereiche, so daß zum einen eine zuverlässige Preßverbindung zwischen den Lenkstangenführungselementen 4a und 4b und dem Zahnstangenlenkgehäuse 1 entsteht und zum anderen ein Sitz für auf das Ende der Zahnstangenlenkgehäuse aufzuschiebende Faltenbälge gebildet wird. Nach dem aufweitenden Einpressen der Lenkstangenführungselemente 4a und 4b wird eine Paßdurchgangsbohrung 6 zur Herstellung des Ritzeleingriffsbereichs 2 am Zahnstangenlenkgehäuse 1 angefertigt. Schließlich erfolgt das Anschweißen des unteren Lagerträgers 7 sowie der oberen Anbauebene 8 koaxial zu der Paßdurchgangsbohrung 6. Optional können noch weitere Herstellungsschritte - wie Beschichten - ausgeführt werden.

Gemäß Figur 5a ist das rohrartige Lenkgehäuse 1 zwischen zwei Spannbacken 11 gehalten. Je einem Gehäuseende gegenüberliegend sind zwei Einpreßstössel 12a, 12b in Bereitstellung positioniert. Diese besitzen jeweils einen zum Lenkgehäuse 1 vorspringenden Stützzapfen 13, welcher gegenüber dem sonstigen Stößel-Grundkörper einen verminderten Durchmesser besitzt, so dass eine ringartige Anschlag- oder Abstützschulter 14 jeweils entsteht. Auf die Stützzapfen 13 ist jeweils ein ringartiges bzw. hohlzylindrisches Lenkstangenführungselement 4a, 4b aufgesteckt und durch die Anschlagschulter 14 abgestützt. So können der Stützzapfen 13 und die Anschlagschulter 14 zusammen als Aufnahme und Abstützung für das jeweilige Lenkstangen-Führungselement 4a, 4b während des Einpressvorgangs dienen, damit eine vorbestimmte Passung für den Innendurchmesser der Lenkstangen-Führungselemente 4a, 4b erhalten bleibt.

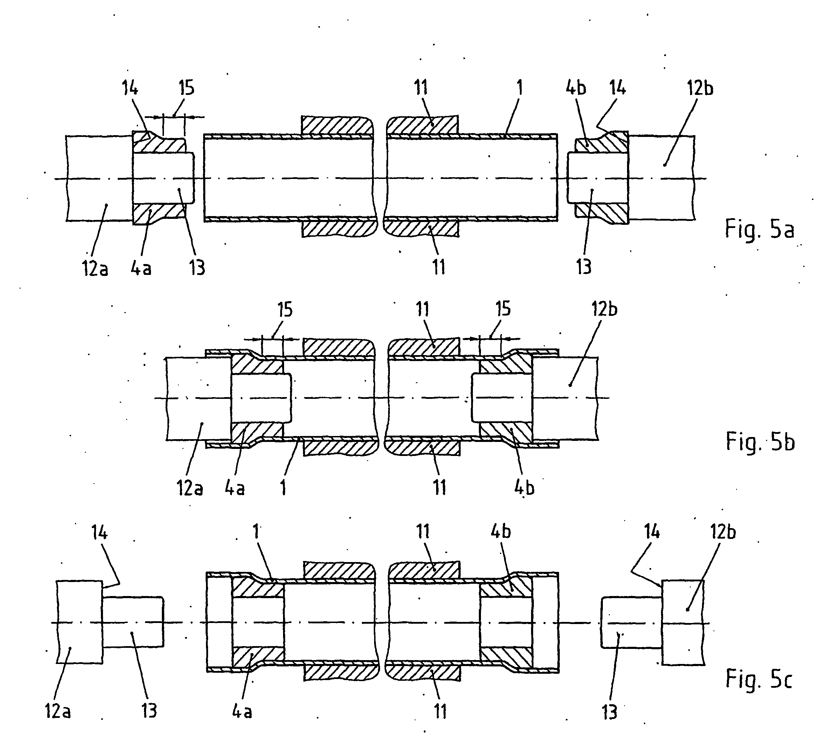

Gemäß Figur 5b ist in einer weiteren Phase des für sich selbstständigen Verfahrens "Aufweiten und Einpressen von Lenkstangenführungen" das jeweilige Führungselement 4a, 4b aufweitend eingepreßt. Letztere weisen jeweils einen Anfangsabschnitt 15 mit verminderten Durchmesser auf, welcher das Lenkgehäuse 1 nur geringfügig aufweitet. Dieser Abschnitt 15 bildet primär einen Zentrierungsabschnitt, damit eine gute Koaxialität erzielt wird. DieEinpreßstössel 12a, 12b sind in der Verfahrensphase gemäß Figur 5b wie gezeichnet aufeinander zu bewegt worden.

Gemäß Figur 5c sind die beiden Einpreßstössel aus dem Lenkgehäuse 1 zurückgefahren worden. Die Führungselemente 4a, 4b sind jeweils innerhalb des Lenkgehäuses 1 verblieben. Die Spannbacken 11 können nun geöffnet bzw. auseinandergefahren werden. Danach kann das an seinen Enden aufgeweitete Rohr mit eingepreßten Führungselementen 4a, 4b aus der Herstellungsvorrichtung bzw. dem Werkzeug entnommen werden.

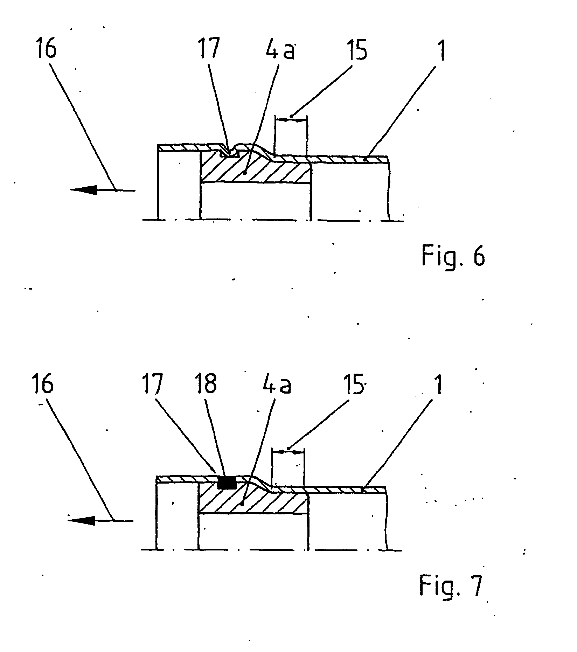

Vor allem bei Einsatz in einer Hydrolenkung ist eine mechanische Verriegelung bzw. Festlegung der Führungselemente 4a, 4b wenigstens gegenüber der Auspreßrichtung 16 empfehlenswert. Dazu sind gemäß Figur 6 die Lenkstangenführungselemente 4a (und/oder 4b) jeweils mit der Gehäuseinnenwandung miteinander in Eingriff gebracht, beispielsweise verstemmt. Letzteres kann umlaufend oder durch einzelne Druckstellen von außen mittels eines mehrfachen Kugelkopfstempels erzeugt werden. Dadurch wird eine plastisch verformte Arretierung 17 von Lenkgehäuse-Innenwandung und Führungselement-Außenwandung gegeneinander erzeugt. Gemäß Figur 7 kann eine solche Arretierung 17 auch durch eine beispielsweise mittels Laser erzeugte Schweißstelle 18 realisiert werden.

### Bezugszeichenliste

- 1: Zahnstangenlenkgehäuse
- 2, 2': Ritzeleingriffsbereich
- 3a, 3b: endseitige Aufweitbereiche
- 4a, 4b: Lenkstangenführungselemente
- 5: U-förmiges Halteblech
- 6: Paßdurchgangsbohrung
- 7: unterer Lagerträger
- 8: obere Anbauebene
- 9,9': Ritzeleinheit
- 10: Servoeinheit
- 11: Spannbacken
- 12a, 12b: Einpreßstößel
- 13: Stützzapfen
- 14: Anschlagschulter
- 15: Zentrierungsabschnitt
- 16: Auspreßrichtung
- 17: Arretierung
- 18: Schweißstelle

## Patentansprüche

1. Verfahren zur Herstellung eines Zahnstangenlenkgehäuses (1), das eine zur Übertragung der Lenkkraft dienende Zahnstange rohrartig umgibt und mindestens einen Ritzeleingriffsbereich (2) aufweist, über den eine Ritzeleinheit (9) zur Längsbewegung der Zahnstange anbringbar ist, ausgehend von einem rohrartigen Ausgangswerkstück aus Stahl, das mittels Innenhochdruckumformens (IHU) innerhalb eines Umformgesenks zur vollständigen Konturausbildung des Zahnstangenlenkgehäuses (1) bearbeitet wird, **gekennzeichnet durch** folgende Verfahrensschritte:
- Einpressen von Lenkstangenführungselementen (4a, 4b) in beide offene Endbereiche des Zahnstangenlenkgehäuses (1),
- gleichzeitig mit dem genannten Einpressen Aufweiten der beiden Endbereiche (3a,3b).

2. Verfahren nach Anspruch 1, **gekennzeichnet durch** Anfertigen einer Paßdurchgangsbohrung (6) zur Fertigstellung des Rüzeleingriffsbereichs (2).

3. Verfahren nach Anspruch 2, **gekennzeichnet durch** Anschweißen eines unteren Lagerträgers (7) sowie einer oberen Anbauebene (8) im Ritzeleingriffsbereich (2) koaxial zur Paßdurchgangsbohrung (6).

4. Verfahren nach Anspruch 3, **dadurch gekennzeichnet, daß** das Anschweißen des Lagerträgers (7) sowie der Anbauebene (8) durch Laserschweißen erfolgt, um einen Wärmeverzug der relativ zueinander befestigten Bauteile zu vermeiden.

5. Verfahren nach Anspruch 3 oder 4, **dadurch gekennzeichnet, daß** das Zahnstangenlenkgehäuse (1) mit dem angebrachten Lagerträger (7) und der Anbauebene (8) mit einer Beschichtung versehen wird, um einen Korrosionsschutz zu schaffen.

6. Verfahren nach einem der vorangehenden Ansprüche, **dadurch gekennzeichnet, daß** die aufgeweiteten Enden (3a,3b) zu Faltenbalgsitzen durch Umformen oder Spanen weiterverarbeitet werden, um eine zuverlässige Verbindung mit hierauf aufgeschobenen Faltenbälgen zu schaffen.

7. Verfahren nach einem der vorangehenden Ansprüche, **dadurch gekennzeichnet, dass** dem Einpressen ein axiales. Einschieben der Lenkstangenfühiungselemonten (4a, 4b) varausgeht.

8. Verfahren nach einem der vorangehenden Ansprüche, **dadurch gekennzeichnet, dass** das Aufweiten der beiden Endbereiche (3a,3b) In radialer Richtung bezüglich einer Mittelachse des Gehäuses (1) erfolgt.

9. Verfahren nach einem der vorangehenden Ansprüche, **gekennzeichnet durch** die Verwendung gegeneinander bewegbarer Stößel (12a,12b) zum Tragen, Einschieben und/oder Einpressen der Lenkstangenführungselementen (4a, 4b) in die Endbereiche (3a,3b).

10. Verfahren nach einem der vorangehenden Ansprüche, **gekennzeichnet durch** ein In zwei Stufen axial versetzt erfoigendes Aufweiten mit unterschiedlichen Weiten oder Innendurchmessern für die Endbereiche(3a,3b), wobei die Weite oder der Innendurchmesser, welche größer sind, dem Gehäuse-Stirnende näher liegen als die kleineren (15).

11. Verfahren nach einem der vorangehenden Ansprüche, **gekennzeichnet durch** eine nach dem Einpressen erfolgende Ausbildung von Arrederelementen (17) derart, dass die Lenkstangenführungselemente (4a, 4b) an einer anliegenden Gehäuseinnenwandung wenigstens in Lösebeziehungsweise Ausziehrichtung (16) festgelegt sind.

12. Verfahren nach Anspruch 11, **dadurch gekennzeichnet, dass** die Arretieralemerite (17) mittels Verbindungsschweißen (18) und/oder plastische Verformung (Fig.6) aneinandertiegender Wandflächen der Gehäuseendbereiche (3a,3b) und der lenkstangenführungselemente (4a, 4b) zur Bildung von Eingriffsstellen miteinander ausgebildet werden.

13. Verfahren nach Anspruch 12, **gekennzeichnet durch** die Verwendung eines Stempels mit einem oder mehreren Kugelköpfen zur Bildung des Eingriffsbereichs (Fig.6).

14. Verfahren nach einem der vorangehenden Ansprüche, **dadurch gekennzeichnet, daß** zur Befestigung des Zahnstangenlenkgehäuses (1) am Fahrwerk eines Fahrzeuges ein durch Biegeumformen hergestelltes, U-förmiges Haitebiech (5) an mindestens einem Endbereich (3a,3b) des Zahnstangenlenkgehäuses (1) angeschweißt wird.

15. Vorrichtung zur Herstellung eines Zahnstangenienkgehäuses (1) nach einem Verfahren gemäß einem der vorangehenden Ansprüche, wobei zur Ausführung des Innenhochdruckumformens eine die Negativkontur des Zahnstangenlenkgehäuses (1), enthaltende, geteilte Umformgesenkeinheit vorgesehen ist, **dadurch gekennzeichnet, daß** für den nachfolgenden Verfahrensschritt des aufweitenden Einpressens der Lenkstangenführungselemente (4a, 4b) eine Preßeinheit (12a,12b) vorgesehen ist.

16. Vorrichtung nach Anspruch 15, **dadurch gekennzeichnet, dass** die Umformgesenkeinheit zwei oder mehr Spannbacken (11) zum Umfassen des rohrartigen Ausgangswerkstücks oder Gehäuses (1) aufweist.

17. Vorrichtung nach Anspruch 15 oder 16, **gekennzeichnet durch** eine der PreBeinheit nachgeordnete Fräseinheit zur Anfertigung der PaBdurchgangsbohrung (6) und schließlich einer Schweißeinheit zur Befestigung eines unteren Lagerträgers (7) sowie einer oberen Anbauebene (8) im Ritzeleingriffsbereich (2) koaxial zur Paßdurchgangsbohrung (6).

18. Vorrichtung nach Anspruch 15 oder 16 oder 17, wobei die Preßeinheit, zwei entsprechend einem Abstand von End- beziehungsweise Aufweitbereichen (3a,3b) eines Zahnstangenlenkgehäuses (1) positionierbaren Einschleb- oder Einpreßstößeln (12a,12b) aufweist, die zueinander verstellbar und mit einer zylindrischen Grundform mit abgestuftem Außendurchmesser ausgebildet sind, wobei eine ringartige Anschlagschulter (14) für Lenkstangenführungselemente (4a, 4b) und ein vorspringender Stützzapfen (13) entstehen, der gegenüber dem sonstigen Stößel-Grundkörper einen verminderten Durchmesser besitzt, und das jeweilige Lenkstangenführungselement (4a,4b) eine ringartige und/oder hohizylindrische Grundform mit einem ersten Abschnitt mit größerem Außendurchmesser zur Aufweitung des Gehäuseendbereichs (3a,3b) und einem zweiten Abschnitt (15) mit kleinerem Außendurchmesser zum Zentrieren beim Einschieben in das rohrartige Gehäuse (1) aufweist und auf den Stützzapfen (13) des jeweiligen Einpreßstößels (12a,12b) aufgesteckt und durch dessen Anschlagschulter (14) abgestützt ist.

## Claims

1. Method of manufacturing a rack steering housing (1), which surrounds in a tubular manner a rack for transmitting the steering power and has at least one pinion mesh region (2), over which a pinion unit (9) is applicable for longitudinal motion of the rack, starting from an initial tubular workpiece composed of steel, which is processed by means of reshaping by internal high pressure within a reshaping die for complete contour configuration of the rack steering housing (1), **characterised by** the following steps:
- injection of steering rod guide elements (4a, 4b) into both open end regions of the rack steering housing (1),
- simultaneously with the above-mentioned injection, widening of the two end regions (3a, 3b).

2. Method according to claim 1, **characterised by** the manufacture of a fit through-bore (6) for the completion of the pinion mesh region (2).

3. Method according to claim 2, **characterised by** welding on of a lower bearing support (7) and of an upper attachment plane (8) in the pinion mesh region (2) coaxial to the fit through-bore (6).

4. Method according to claim 3, **characterised in that** the welding on of the bearing support (7) and of the attachment plane (8) is effected by laser welding in order to avoid heat distortion of the components fixed relative to one another.

5. Method according to claim 3 or 4, **characterised in that** the rack steering housing (1) with the mounted bearing support (7) and the attachment plane (8) is provided with a coating in order to create corrosion protection.

6. Method according to one of the preceding claims, **characterised in that** the widened ends (3a, 3b) are further processed into seats for expansion bellows by reshaping or cutting in order to create a reliable connection to expansion bellows mounted thereon.

7. Method according to one of the preceding claims, **characterised in that** axial insertion of the steering rod guide elements (4a, 4b) precedes injection.

8. Method according to one of the preceding claims, **characterised in that** the widening of the two end regions (3a, 3b) is effected in the radial direction with respect to a central axis of the housing (1).

9. Method according to one of the preceding claims, **characterised by** the use of rams (12a, 12b) which are movable in opposite directions for the support, insertion and/or injection of the steering rod guide elements (4a, 4b) into the end regions (3a, 3b).

10. Method according to one of the preceding claims, **characterised by** widening effected in an axially staggered manner in two stages to different widths or inner diameters for the end regions (3a, 3b), the widths or inner diameters that are larger being closer to the housing end face than the ones that are smaller (15).

11. Method according to one of the preceding claims, **characterised by** the formation, effected after injection, of locking elements (17) in such a manner that the steering rod guide element (4a, 4b) is fixed to an adjacent housing inner wall at least in the release or removal direction (16).

12. Method according to claim 11, **characterised in that** the locking elements (17) are formed by means of connecting welding (18) and/or plastic deformation (Fig. 6) of abutting wall faces of the housing end regions (3a, 3b) and of the steering rod guide elements (4a, 4b) in order to form points for meshing together.

13. Method according to claim 12, **characterised by** the use of a swage with one or more ball heads for forming the mesh regions (Fig. 6).

14. Method according to one of the preceding claims, **characterised in that** in order to fix the rack steering housing (1) to the chassis of a vehicle, a U-shaped holding plate (5) produced by bending deformation is welded to at least one end region (3a, 3b) of the rack steering housing (1).

15. Apparatus for manufacturing a rack steering housing (1) according to a method according to the preceding claims, wherein for carrying out internal high pressure reshaping a divided reshaping die unit containing the negative contour of the rack steering housing (1) is provided, **characterised in that** for the following processing stage of the expanding injection-in of the steering rod guide elements (4a, 4b), a pressing unit (12a, 12b) is provided.

16. Apparatus according to claim 15, **characterised in that** the reshaping die unit has two or more clamping jaws (11) for grasping the tubular initial workpiece or housing (1).

17. Apparatus according to claim 15 or 16, **characterised by** a milling unit downstream of the pressing unit for manufacturing the fit through-bore (6) and finally a welding unit for fixing a lower bearing support (7) and an upper attachment plane (8) coaxially to the fit through-bore (6) in the pinion mesh region (2).

18. Apparatus according to claim 15 or 16 or 17, wherein the pressing unit has two insertion or injection rams (12a, 12b) which are positionable according to a distance of end or widened regions (3a, 3b) of a rack steering housing (1) and which are formed displaceably relative to one another and having a cylindrical basic shape with graduated outer diameters, wherein an annular stop shoulder (14) for steering rod guide elements (4a, 4b) and a protruding support pin (13) are formed, the pin having a reduced diameter compared to the rest of the ram base body, and the respective steering rod guide element (4a, 4b) has an annular and/or hollow cylindrical basic shape with a first section of larger outer diameter for widening the housing end region (3a, 3b) and a second section (15) of smaller outer diameter for centring upon insertion into the tubular housing (1) and is mounted on the support pin (13) of the respective injection ram (12a, 12b) and is supported by its stop shoulder (14).

## Revendications

1. Procédé pour la fabrication d'une direction à crémaillère (1), qui entoure une crémaillère servant à la transmission de la force de braquage et présente au moins une zone d'engagement de pignon (2), sur laquelle une unité à pignon (9) peut être amenée pour le déplacement longitudinal de la crémaillère, à partir d'une pièce de départ tubulaire en acier, qui est usinée par formage sous haute pression intérieure (IHU) à l'intérieur d'une matrice de formage pour la réalisation complète du contour de la direction à crémaillère (1), **caractérisé par** les étapes de procédé suivantes :
- enfoncement d'éléments de guidage de bielle de direction (4a, 4b) dans les deux zones d'extrémité ouvertes de la direction à crémaillère (1),
- en même temps que l'enfoncement cité. Elargissement des deux zones d'extrémité (3a, 3b).

2. Procédé selon la revendication 1, **caractérisé par** la confection d'un alésage de passage ajusté (6) pour la fabrication de la zone d'engagement de pignon (2).

3. Procédé selon la revendication 2, **caractérisé par** le soudage d'un support de palier (7) inférieur et d'un plan de montage (8) supérieur dans la zone d'engagement de pignon (2) sur le même axe que l'alésage de passage ajusté (6).

4. Procédé selon la revendication 3, **caractérisé en ce que** le soudage du support de palier (7) et du plan de montage (8) s'effectue par soudage au laser, afin d'éviter une déformation thermique des composants fixés les uns par rapport aux autres.

5. procédé selon la revendication 3 ou 4, **caractérisé en ce que** la direction à crémaillère (1) est doté du support de palier (7) mis en place et du plan de montage (8) avec un revêtement, afin de créer une protection anticorrosion.

6. Procédé selon l'une quelconque des revendications précédentes, **caractérisé en ce que** les extrémités (3a, 3b) élargies sont retraitées par formage ou enlèvement de copeaux pour former des sièges de soufflet, afin de créer une liaison fiable avec des soufflets glissés dessus.

7. Procédé selon l'une quelconque des revendications précédentes, **caractérisé en ce qu'**une introduction axiale des éléments de guidage de bielle de direction (4a, 4b) précède l'enfoncement.

8. Procédé selon l'une quelconque des revendications précédentes, **caractérisé en ce que** l'élargissement des deux zones d'extrémité (3a, 3b) s'effectue dans le sens radial par rapport à un axe médian du boîtier (1).

9. Procédé selon l'une quelconque des revendications précédentes, **caractérisé par** l'utilisation de coulisseaux (12a, 12b) réciproquement mobiles pour le support, l'introduction et/ou l'enfoncement des éléments de guidage de la bielle de direction (4a, 4b) dans les zones d'extrémité (3a, 3b).

10. Procédé selon l'une quelconque des revendications précédentes, **caractérisé par** un élargissement s'effectuant sur deux niveaux avec un décalage axial avec des largeurs différentes ou des diamètres intérieurs différents pour les zones d'extrémité (3a, 3b), la largeur ou le diamètre intérieur, qui sont plus grands, se situant plus près de l'extrémité frontale du boîtier que les plus petits (15).

11. Procédé selon l'une quelconque des revendications précédentes, **caractérisé par** une réalisation, intervenant après l'enfoncement, d'éléments d'arrêt (17) de telle sorte que les éléments de guidage de bielle de direction (4a, 4b) sont fixés sur une paroi interne de boîtier contiguë au moins dans une direction de desserrage ou une direction d'extraction (16).

12. Procédé selon l'une quelconque des revendications précédentes, **caractérisé en ce que** les éléments d'arrêt (17) sont réalisés par soudage d'assemblage (18) et/ou par déformation plastique (figure 6) de surfaces murales contiguës des zones d'extrémité de boîtier (3a, 3b) et des éléments de guidage de bielle de direction (4a, 4b) pour la formation de points d'engagement entre eux.

13. Procédé selon l'une quelconque des revendications précédentes, **caractérisé par** l'utilisation d'un poinçon avec une ou plusieurs têtes sphériques pour la formation de la zone d'engagement (figure 6).

14. Procédé selon l'une quelconque des revendications précédentes, **caractérisé en ce que**, pour la fixation de la direction à crémaillère (1) sur le châssis d'un véhicule, une tôle de retenue (5) en forme de U et fabriquée par formage par flexion est soudée sur au moins une zone d'extrémité (3a, 3b) de la direction à crémaillère (1).

15. Dispositif pour la fabrication d'une direction à crémaillère 1() selon un procédé conformément à l'une des revendications précédentes, une unité de matrice de formage divisée et contenant le contour négatif de la direction à crémaillère (1) étant prévue pour la réalisation du formage sous haute pression intérieure, **caractérisée en ce qu'**une unité de presse (12a, 12b) est prévue pour l'étape de procédé consécutive de l'enfoncement élargisseur des éléments de guidage de bielle à direction.

16. Dispositif selon la revendication 15, **caractérisé en ce que** l'unité de matrice de formage présente deux mâchoires de serrage (1) ou plus pour entourer la pièce à travailler de départ de forme tubulaire ou le boîtier (1).

17. Dispositif selon la revendication 15 ou 16, **caractérisé par** une unité de fraisage, placée en aval de l'unité de presse, pour la confection de l'alésage de passage ajusté (6) et enfin d'une unité de soudage pour la fixation d'un support de palier (7) inférieur et d'un plan de montage (8) supérieur dans la zone d'engagement de pignon (2) sur le même axe que l'alésage de passage ajusté (6).

18. Dispositif selon la revendication 15 ou 16 ou 17, qui présente deux coulisseaux d'introduction ou d'enfoncement (12a, 12b) pouvant être positionnés en fonction d'une distance de zones d'extrémité ou de zones d'élargissement (3a, 3b) d'une direction à crémaillère (1), qui sont déplaçables l'une par rapport à l'autre et sont réalisés avec une forme de base cylindrique avec un diamètre extérieur gradué, un épaulement de butée (14) annulaire pour des éléments de guidage de bielle de direction (4a, 4b) et un pivot de support (13) saillant se formant, lequel présente un diamètre réduit par rapport au corps de base habituel du coulisseau, et l'élément de guidage de bielle de direction (4a, 4b) concerné présentant une forme de base annulaire et/ou de cylindre creux avec une première partie avec un diamètre extérieur plus grand pour l'élargissement de la zone d'extrémité de boîtier (3a, 3b)à et une seconde partie (15) avec une plus petit diamètre extérieur pour le centrage lors de l'introduction dans le boîtier (1) tubulaire et est emboîté sur le pivot de support (13) du coulisseau d'enfoncement (12a, 12b) concerné et est soutenu par son épaulement de butée (14).
